# EUROPEAN PATENT SPECIFICATION

(11) **EP 1 359 730 B1**
(45) Date of publication and mention of the grant of the patent: **30.08.2006**
(21) Application number: 03252739.2
(22) Date of filing: 30.04.2003
(51) Int. Cl.: H04L 29/12, H04Q 7/30

(54) **A node and a communications method of a communications bus**
Knoten und Kommunikationsverfahren eines Kommunikationsbusses
Un noeud d'un bus de communication et procédé de communication

(30) Priority: 03.05.2002 WO PCT/IB02/02658
(43) Date of publication of application: 05.11.2003
(73) Proprietor: Nokia Corporation, 02150 Espoo (FI)
(72) Inventor: Kiiski, Matti, 90460 Oulunsalo (FI); Vainikka, Markku, 90810 Kiviniemi (FI); Viero, Timo, 02360 Espoo (FI)
(74) Representative: Style, Kelda Camilla Karen

(56) References cited:
- WO-A-01/67676
- WO-A-97/34393
- US-A- 4 577 308

## Description

### Field of the present invention

The present invention relates to node of a communications bus and in particular, but not exclusively, to a node of a bus for use in a base transceiver station of a wireless telecommunications network.

### Background to the Invention

Wireless cellular networks are known. The area covered by the network is divided into cells. Each cell is created by a base transceiver station which is arranged to communicate with mobile devices, such as for example mobile telephones located in the cells.

A number of different standards are known which govern the communication between mobile stations and base stations as well as with other network elements. One example of a currently known standard is the GSM standard (global system for mobile communication). This is the so-called second generation standard. At the present time, work has been carried out on the so-called third generation standard. In general, the third generation standards use code division multiple access CDMA in the radio interface between the mobile stations and base transceiver stations.

The base station is arranged to convert data, for example, data in packet form, received at a base band frequency from a core network to the required radio frequency. Additionally, the base station also provides a routing function and directs the received packets to different nodes of the base station. The nodes may be provided by an ASIC (application specific integrated circuits), a processor or a field programmable gate array FPGA or the like. Each node may perform a particular function in respect of the packet and route the packet to a particular node. Alternatively a node may only provide a routing function. It should be appreciated that one ASIC or the like may provide more than one node. United States patent specification US 4,577,308 discloses a packet switching network comprising switching nodes.

Within a base station, a bus protocol is used to communicate between different nodes. Currently, a base transceiver station has a large number of nodes. Accordingly, to ensure that packets can be directed to the required node, the address information in the packet needs to be relatively large. This in turn has the result of increasing the overall size of the packet. Alternatively, if the size of the packet is not increased, then the amount of data carried by the packet is decreased with the result that more packets are required. The size and number of the packets has an effect on the latency, that is the time taken for a packet to be transferred from one bus node to another. In particular, the latency is increased which is undesirable. The required bandwidth also has to be relatively large, which is also undesirable.

Within base stations, two types of data transmissions exist between nodes. Point to point transmissions and point to multipoint transmissions. The latter transmissions can be broadcast transmission where the data is transmitted to all relevant nodes or multicast where the data is transmitted to a subset of the relevant nodes. The addressing required for point to point transmissions is relatively simple in that the address needs to identify the destination. Point to multipoint addressing is more complicated in that the addressing needs to identify the multipoint destinations, that is more than one destination. Multicast transmission is used particularly in the uplink direction of a base transceiver station that is from the radio frequency to the base band as several base band units need to have access to data from a particular antenna and on a particular carrier frequency.

Previous proposals for dealing with broadcast and multicast addressing, for example in an Ethernet, have involved reserving specific addresses for this. This increases the size of the address field required to provide all of the addresses, with the disadvantages already mentioned.

### Summary of the Invention

It is an aim of embodiments of the present invention to address or at least mitigate one or more of the problems discussed previously.

According to one aspect of the present invention, there is provided a node of a communications bus, said node comprising
input means for receiving data from another node of said bus;
output means for outputting data to another node of said bus;
communication means between said input means and said output means, said communication means comprising a plurality of multiplexers wherein data from said input means is directed to a predetermined one of said multiplexers and said multiplexers direct data for said output means to a predetermined one or more of said output means.

Preferably, said bus has data flowing in a plurality of directions and said node is arranged to receive data flowing in said plurality of directions, respective ones of said multiplexers being associated with different ones of said plurality of directions.

Preferably, a first of said plurality of directions is an uplink direction and a second of said plurality of directions is a downlink direction.

Preferably, each of said multiplexers is associated with a predetermined one or more of said input means and/or said output means.

Preferably, the received data comprises an address field. Preferably said address is arranged to identify said node.

Preferably, said node comprises a plurality of subnodes. The subnodes may be arranged to provide different processes in respect of said data. The address field may be arranged to have a one part identifying said node and another part identifying a subnode.

At least part of said address field may be used to determine which one or more of said output means is used. Preferably said output means is arranged to unicast said data to a single node and/or multicast to a plurality of nodes. The address of any node may be used to send data to a plurality of nodes. The address of said node from which said data is output may be used to send data to a plurality of nodes. The address field may be arranged to identify one of a source node and a destination node. The address may be arranged to identify a source node when a first one of said mulitplexers is used and the address is arranged to identify a destination node when a second one of said multiplexers is used. Preferably, a single multiplexing table associated with a given multiplexer is arranged to support both addressing based on the source node and addressing based on the destination node.

Preferably, said multiplexers are configurable. Each of said mulitplexers may comprise a storage means storing routing information. The routing information stored in said storage means may be configurable.

At least one address may be used by said multiplexers to direct data to different nodes.

The content of said data may be used to determine the multiplexer to be used for that data .

According to one aspect of the invention, there is provided a method of data communication in a node of a communications bus, said method comprising the steps of: receiving data from another node of said bus via input means, outputting data to another node of said bus via output means, providing a plurality of multiplexers,directing data from said input means to a predetermined one of said multiplexers and directing data for said output means, using said multiplexers to a predetermined one or more of said output means.

### Brief Description of the Drawings

For a better understanding of the present invention and as to how the same may be carried into effect, reference will be made by way of example only to the accompanying drawings in which:
Figure 1 shows the basic structure of a wireless communications network;
Figure 2 schematically shows a base transceiver station used with embodiments of the present invention;
Figure 3 shows a packet used in embodiments of the present invention;
Figure 4 shows a known node multiplexer of a base transceiver station;
Figure 5 shows a node embodying the present invention of a base transceiver station;
Figure 6 illustrates schematically the functionality of the bus multiplexer of Figure 5; and
Figure 7 illustrates an example of a bus network used in embodiments of the present invention.

### Detailed Description of Embodiments of the Present Invention

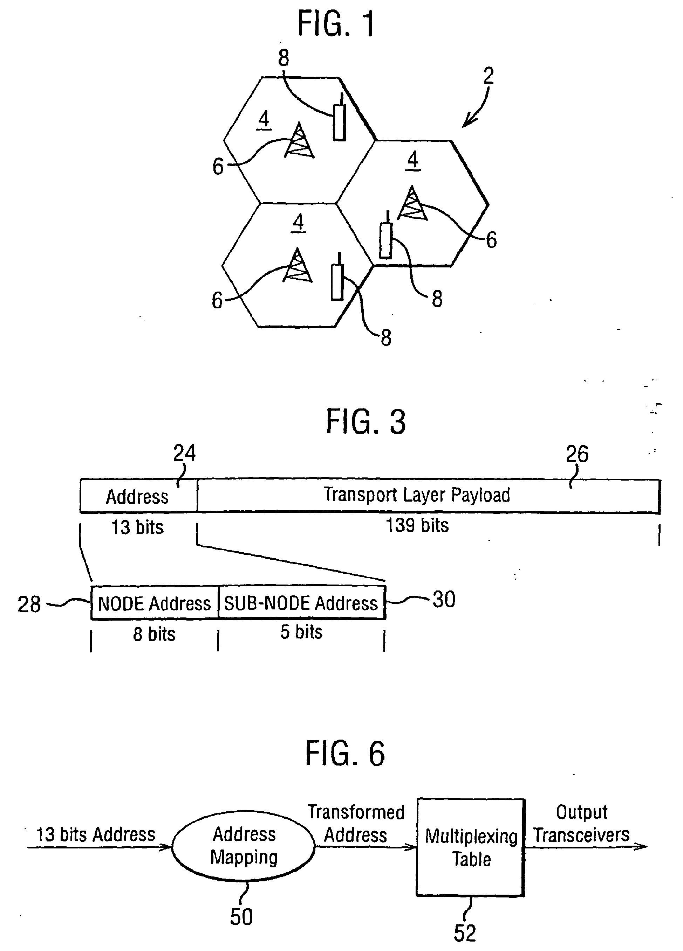

Reference is made to Figure 1 which shows schematically a cellular telecommunications system in which embodiments of the present invention can be incorporated. The area covered by the network 2 is divided into a plurality of cells 4. Each cell 4 is created by a base transceiver station 6 which is arranged to communicate with user equipment 8 by a radio interface. The user equipment can take any suitable form and be fixed or mobile equipment. The user equipment may for example be a mobile station, mobile terminal, mobile telephone, computer, personal computer (PC), portable computer such as a laptop computer, a personal digital assistant (PDA) or the like.

Embodiments of the present invention will be described in the context of a system which uses code division multiple access (CDMA). However, it should be appreciated that alternative embodiments of the present invention can be used with any other suitable system, for example systems using GSM, time division multiple access, frequency division multiple access, space division multiple access as well as any combination of these techniques.

The base transceiver station is controlled by a radio network controller which is sometimes referred to as a base station controller, depending on the standard. The radio network controller is in turn controlled by a mobile services switching centre (MSC) or similar entity.

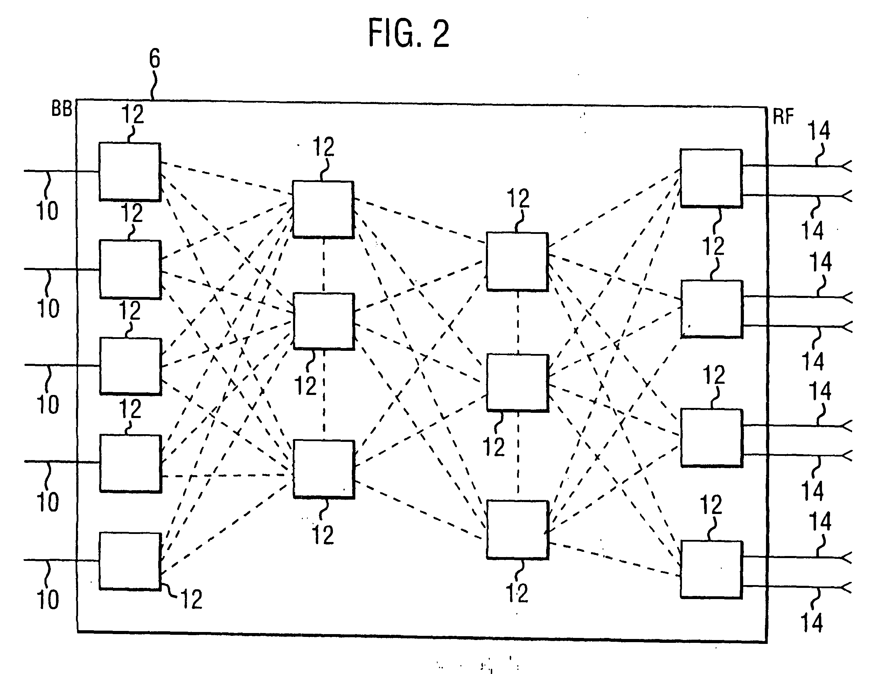

Reference is made to Figure 2 which schematically shows a base transceiver station 6 in which embodiments of the present invention can be incorporated. The base transceiver station 6 has input ports 10 arranged to receive inputs from other elements of the network. In particular, the ports 10 are arranged to receive inputs from core network elements, possibly through other internal nodes of the base transceiver station, such as the radio network controller, the mobile switching services controller or a signalling GPRS (general packet radio service), support node SGSN or the like.

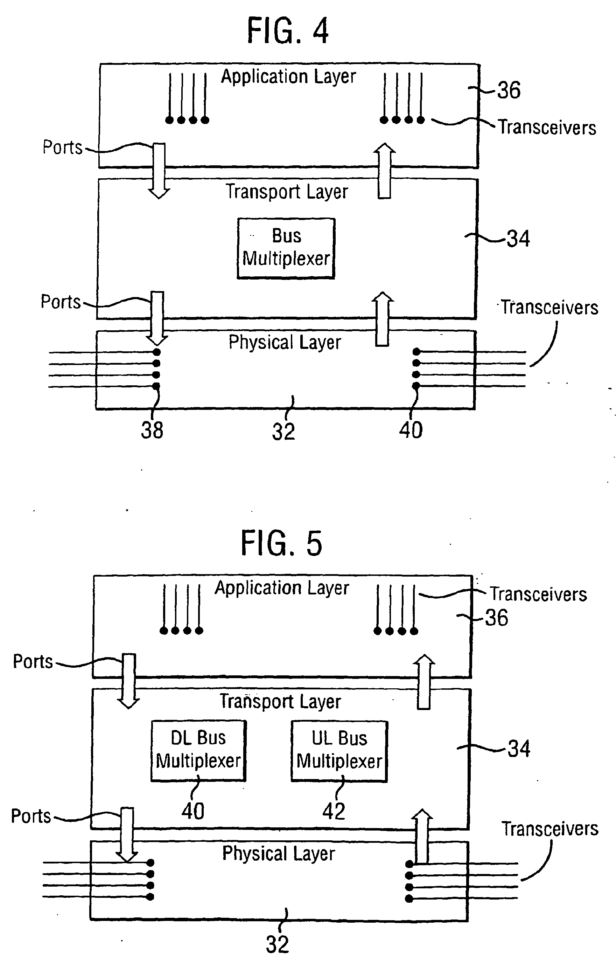

The input data is in the form of packet data as specified in the related air interface standard. The structure of the packet data used in embodiments of the present invention, especially between baseband and radio frequency nodes of a base transceiver station, will be discussed in more detail hereinafter with reference to Figure 3. The packets received from the core network are at the base band frequency and are in digital form. These packets are intended for various mobile stations served by the base transceiver station. These base band packets need to be processed to provide output packets at the required radio frequency with the required modulation.

The base station can be regarded as being made up of a number of nodes 12. These nodes are connected together either using point to point connections or by using a bus arrangement. The arrangement shown in Figure 2 shows point to point connections for illustrative purposes but in practice a suitable bus arrangement will be provided. The packets received from the input ports 10 are passed through various nodes of the base station and are up converted and are subject to other processing. The nodes can notionally be divided into those performing baseband processing and those providing radio frequency processing with some nodes providing a connection between these two types of node.

Similarly, the base station will receive data packets from a number of the mobile stations or the like served by the base station. The packets will be in analogue form and will be at the radio frequency. These packets need to be down converted to the base band frequency. The processing of the received radio frequency packets down to the base band frequency occurs as the packets are passed through various nodes of the base transceiver station. It will be appreciated that in preferred embodiments of the present invention, the ports 10 are bidirectional and also act as output ports.
In alternative embodiments of the present invention, separate output ports may be provided.

The nodes 12 may each be provided by an ASIC (application specific integrated circuit) or any other suitable hardware. Alternatively, or additionally, two or more nodes may be contained in one ASIC.

Reference is made to Figure 3 which shows the structure of packets used in embodiments of the present invention. The packet is arranged to have an address part 24 and a payload part 26. The payload part is typically 139 bits and contains the data intended for the destination, for example, the mobile station or a core network element. The payload can of course have a different number of bits. In preferred embodiments of the present invention, the address field is part of the header and is 13 bits. In preferred embodiments of the present invention, the address is divided into two parts. The first part 28 is the node address and is 8 bits. The second part of the address is the subnode address 30 and is 5 bits. The node and subnode address fields are used in a hierarchical addressing scheme where the node field 28 is used to uniquely address a specific bus node eg an ASIC or a node contained on the ASIC and the subnode address field 30 is used to identify a specific module within the node. An address size of 8 bits allows 256 nodes to be addressed with up to 32 modules to be addressed with the 5 bits of subnode address. The node address does not necessarily represent the address of the physical device such an ASIC. The ASIC may have one or more node addresses and the nodes may have varying numbers of active subnode addresses. It should be appreciated that the number of bits selected for the node and subnode addresses can be any suitable number.

In preferred embodiments of the present invention, the address is divided into the node and subnode addresses. However, it should be appreciated that in alternative embodiments of the present invention, the address field may not be divided into the subaddresses but there may be effectively a unique single address for each subnode.

The address controls the routing of each packet. In the down link direction, that is from the base band to the radio frequency direction, all the message transfers are usually point to point and the address will identify the target node. In other word destination addressing is used. However, in the up link direction, that is from the radio frequency to the base band, message transfers can be multicast, that is point to multipoint, or point to point transfers. Up link antenna sample data as well as some measurement results may require multicasting. Typically, other message transmissions in the up link direction will be point to point. In the case of broadcast ing or multicasting in the uplink direction, source addressing is used, that is the message contains the address of the source node. This is interpreted by the circuitry such that the packet is directed to all the required destination nodes.

Reference will now be made to Figure 4 which shows the bus used in the node. The bus uses a three layer protocol. These three layers 32, 34 and 36 are shown in Figure 4. It should be appreciated that this layer structure is a well known mechanism for illustrating the functionality of nodes.

The physical layer 32 is responsible for the transmission of messages and includes framing, coding and serialisation of the messages. The physical layer has a number of input and output ports 38 and 40 respectively. These ports are arranged to receive packets from, for example, another node.

The transport layer is responsible for the end to end delivery of the message or routing of the messages. The application layer 36 provides the mapping of different types of packets to the payload.

In particular, the transport layer 34 has a bus multiplexer which is arranged to deal with both up link and down link messages. The application layer 36 is the layer which is responsible for processing the packet and for example may perform part of the up or down conversion is the application layer. The node address typically identifies the node and the subnode address will typically address a function of the application layer. Thus, the arrangement of Figure 4 shows a single bus multiplexer for all received messages. When a bus node receives a message from another node, the message is first received by a transceiver at the physical layer 32. The message is then sent to the transport layer 34 which determines the output transceiver with the help of a multiplexing table. Assuming that the transceiver at the physical layer is targeted, the message is forwarded back to the physical layer for transmission to the next node. Assuming that payload of a message is processed in the current node, transport layer will forward the message to a transceiver at the application layer based on the address of the message. The application layer may then retransmit the message to the bus after processing.

Reference is made to Figure 5 which shows a node embodying the present invention. In general, communication networks consist of bidirectional links or unidirectional links in opposite directions which connect nodes. In each node, the same routing algorithm is applied to all received messages. In an alternative approach the bidirectional network is separated into two unidirectional networks that operate independently. Where messages need to be transferred between these unidirectional networks, they must go across the application layer. The physical and transport layers of the two networks operate independently. In a hybrid network concept, received messages in all bus nodes are divided into two groups and separate routing algorithms are applied to these groups. Messages may be classified for example based on the direction of the received messages. In embodiments of the present invention, as will be discussed in more detail, the hybrid approach is used with the down link and up link networks and separate routing tables for the up link and down link messages.

As with the arrangement shown on Figure 4, the node is shown as having a physical layer, a transport layer 34 and an application layer 36. However, in preferred embodiments of the present invention, the bus multiplexer has been divided into two. It should be appreciated that in alternative embodiments of the present invention, the bus multiplexer may be divided into three or more multiplexers. In preferred embodiments of the present invention, one of the multiplexers 40 is arranged to deal with down link traffic whilst the other multiplexer 42 is arranged to deal with up link traffic. It should be appreciated that in alternative embodiments of the present invention, a different division of the traffic can be achieved. In other words, one multiplexer may deal with some up link traffic and some down link traffic. In this concept, the required multiplexing table must be selected based on the content of the message. In alternative embodiments of the present invention, different multiplexers may be associated with different ports. However, dividing the multiplexers into an up link bus multiplexer 42 and down link multiplexer 40 has the advantage of being simple to implement and conceptually clear. Additionally, as will be described in more detail, a simplified address structure can be used.

The application layer 36 is arranged to indicate through appropriate parameters which receiver ports are connected to the down link multiplexer and which receiver ports are connected to the up link multiplexer. It should be appreciated that the bus multiplexers 40 and 42 can both forward messages to the transmitter port of any transceiver.

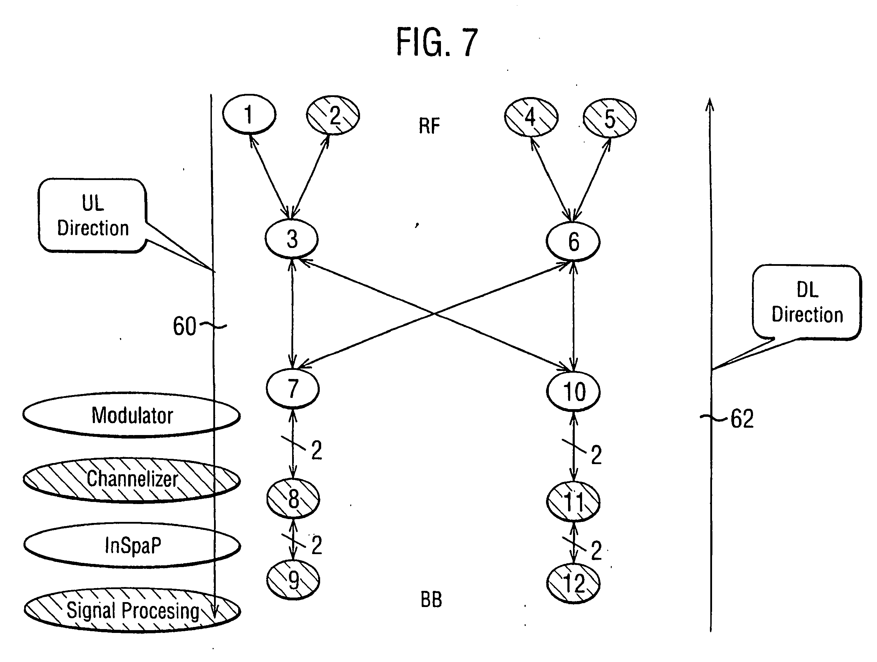

Reference will now be made to Figure 6 which illustrates the functionality of the bus multiplexers 40 and 42. The 13 bit input address of the message is first processed by a mapping unit 50 which typically selects only a subset of the input bits. For example, this may be the node address. The mapping unit 50 transforms the address which is then used as an index to a multiplexing table which contains the indices of the transceivers into which the message should be transmitted.

An example of a multiplexing table is given below:

**TABLE 1**

| Transformed Address (input) | Transceivers (output) |
|---|---|
| 00 | (MSB) 000001 (LSB) |
| 01 | 000010 |
| 10 | 000110 |
| 11 | 100001 |

In the table, there exists a bit vector (or row) that corresponds to each transformed address. In the shown example, the two bit transformed address is used. The length of the bit vector equals the number of transceivers that exist in the node. Bit "1" means that the message must be forwarded to the corresponding transceiver whilst "0" prohibits message transmission. It should be appreciated that the least significant bit (LSB) of the bit vector represents transceiver with index 0. As an example, assume a message with transformed address 10. As indicated by the multiplexing table, this message will be transmitted to adjacent nodes that are connected to transceivers having indices 1 and 2

In embodiments of the present invention, as different multiplexers are provided for the up link and the down link traffic, this means that the number of unique addresses required in the system can be reduced. For example, addresses in both up link and down link direction need to be unique but the same address may be reused in the bus network. However, as different multiplexers are used for the up link and down link messages, the routing of the messages will be correct. This means that the number of bits in an address can be reduced. Furthermore, there is an additional advantage which can be used in relation to multicasting. In the arrangement shown in Figure 4, each multicast address needs to be unique. As mentioned previously, this is undesirable if that address space is consumed. If separate routing algorithms are used for down link and up link messages, the source node address of the message can be used as the multicast address and based on this source address, the message can be broadcast or multicast to the right node. This is advantageously used in embodiments of the present invention.

It should be appreciated that the routing is controlled by the information stored in the multiplexer tables. In preferred embodiments of the present invention, different mulitplexers have different tables. The data in the tables can be altered as required from time to time. Thus if the configuration of the base station needs to altered due to a change in circumstance, this can be changed by altering the information in the tables.

Reference is made to Figure 7 which shows schematically two directions in a base transceiver station. The first direction 60 is the up link direction from the radio frequency to the base band whilst the second direction 62 is from the base band to the radio frequency and is the down link direction. As can be seen in this Figure 7, node 1 is a modulator node and is connected to node 3. Node 3 is also connected to node 2 which is a channelizer. Node 3 is connected to node 7. Additionally, node 3 is connected to a node 10, Node 7 is connected to node 8 which in turn is connected to node 9. Nodes 8 and 9 provide signal processing i.e. they are base band nodes.

Starting from the base band node 12, it is connected to other base band node 11 which provide signal processing. Node 11 is connected to node 10. Node 10 is, as previously mentioned connected to node 3 and also connected to node 6. Node 6 is connected to nodes 4 and 5 which are at the radio frequency end of the path. Node 4 is a modulator and node 5 is a channelizer. Additionally, node 6 is also connected to node 7 of the up link path.

In this example, the base band consists of nodes 8, 9, 11, and 12 whilst radio frequency nodes are nodes 1, 2, 4, 5. Nodes 3, 6, 7, 10 connect base band and radio frequency nodes.

By effectively having separate up link and down link multiplexers, the up link and the down link directions are effectively separated. In the arrangement shown in Figure 7, a node is on both the up link and the down link paths as indicated by the bidirectional arrows.

Reference will now be made to the following Table 2 which shows one example of the internode communication requirements for a WCDMA/frequency division duplex example such as shown in Figure 7:

### TABLE 2

It is assumed that base band or signal processing nodes use only sub-node address 0 and that two modulator and channelizer subnodes exist in nodes 1, 4 and 2, 5, respectively.

Format of the the columns is the following:
Source_node. subnode, destination node subnode, direction.

| | | | |
|---|---|---|---|
| 8.0, | 1.1, | DL | // Nodes 1.1 (TX) and 2.1 (RX) generate |
| 8.0, | 4.1, | DL | // WCDMA Cell No 0 |
| 9.0, | 1.1, | DL | |
| 9.0, | 4.1, | DL | |
| 11.0, | 1.2, | DL | //Nodes 1.2 and 2.2 generate |
| 11.0, | 4.2, | DL | // WCDMA Cell No 1 |
| 12.0, | 1.2, | DL | |
| 12.0, | 4.2, | DL, | |
| | | | |
| 2.1, | 8.0. | UI, | // Nodes 4.1 and 5.1 generate |
| 5.1, | 8.0, | UL, | // WCDMA Cell No 2 |
| 2.1, | 9.0, | UL, | |
| 5.1, | 9.0, | UL, | |
| 2.2, | 11.0, | UL, | // Nodes 4.2 and 5.2 generate |
| 5.2, | 11.0, | UL, | // WCDMA Cells No 3 |
| 2.2, | 12.0, | UL, | |
| 5.2, | 12.0, | UL, | |

The numbers are in the form 4.2. For example, the first number represents the node and the second number represents the subnode.

Reference is made to the following Table 3 which has the multiplexing tables for nodes 3, 6, 7, and 10 such that internode communication requirements of Table 2 are fulfilled.

**TABLE 3**

| | | |
|---|---|---|
| // Multiplexing tables | | |
| | | |
| // Node 3, DL: | | |
| // Format: Address (in message): output bus link (transceiver) | | |
| 1.1: | 3-1 | (link from Node 3 to Node 1) |
| 1.2: | 3-1 | |
| | | |
| // Node 3, UL: | | |
| 2.1: | 3-7 | |
| 2.2: | 3-10 | |
| | | |
| // Node 6, DL: | | |
| 4.1: 6-4 | | |
| 4.2: 6-4 | | |
| | | |
| // Node 6, UL: | | |
| 5.1: 6-7 | | |
| 5.2:6-10 | | |
| | | |
| // Node 7, DL: | | |
| 1.1: | 7-3 | |
| 4.1: | 7-6 | |
| | | |
| // Node 7, UL: | | |
| 2.1: | 7-8 | |
| 5.1: | 7-8 | |
| | | |
| // Node 10, DL: | | |
| 1.2: | 10-3 | |
| 4.2: | 10-6 | |
| | | |
| // Node 10, UL: | | |
| 2.2: | 10-11 | |
| 5.2: | 10-11 | |

As can be seen from Table 3, destination based addressing is used in down link direction whilst source based addressing is used in up link direction.

Embodiments of the present invention provide an arrangement where the total band width over the bus can be kept to a reasonable level. This is by reducing the size of the address field. The band width directly influences power dissipation as well as the cost of bus. Embodiments of the present invention also improve latency. Short messages provide better latency. Reducing the size of the address field has this advantage.

The size of the address field will of course depend on the actual implementation but a reduction of the order of 50% may be achieved as compared to the prior art.

In summary, embodiments of the present invention provide an addressing scheme and message routing arrangement for a bus protocol that is used for data transfer between radio frequency and base band processing units of a base transceiver station. Embodiments of the present invention can be used in a message based bus protocol where a compact 13 bit address field exists in each message. Thus, as discussed previously, the length of the address field has been minimised. Embodiments of the present invention allow the address space, ie the range of addresses, to be used as efficiently as possible. The address of a bus node, particularly the address of a transmitter is used when performing a broadcast or multicast transmission from a single node to several target nodes. In order to enable effectively a "reuse" of node addresses which are effectively unicast addresses, as broadcast or multicast address, the communication network (bus) is separated into two directions. In preferred embodiments, an up link multiplexer and a down link multiplexer are provided with separate multiplexing tables provided for each direction. It should be appreciated that the use of more than one multiplexer means that the size of the required tables are individually smaller than in the known arrangement. By having smaller tables, they can be used more quickly. In a bus node, data coming from a given receiver port is defined to contain either up link or down link data.

In one alternative embodiment of the present invention, the content of each message is used to determine the multiplexer that is used. External information may provide the rules on how to use the content.

Embodiments of the present invention have been described in the context of the base transceiver station. It should be appreciated that embodiments of the present invention can be applied to other entities of a wireless telecommunications network. It should be appreciated that embodiments of the present invention may be applicable to wired networks or even may be used in non-communication related applications.

Preferred embodiments of the present invention have been described in the context of a CDMA system. However, it should be appreciated that embodiments of the present invention can be used with any suitable standard.

## Claims

1. A node (12) of a communications bus, said node comprising
input means (10) for receiving data from another node (12) of said bus;
output means for outputting data to another node (12) of said bus;
communication means between said input means and said output means, said communication means comprising a plurality of multiplexers (40, 42) wherein data from said input means is directed to a predetermined one of said multiplexers (40, 42) and said multiplexers (40, 42) direct data for said output means to a predetermined one or more of said output means.

2. A node as claimed in claim 1, wherein said bus has data flowing in a plurality of directions and said node is arranged to receive data flowing in said plurality of directions, respective ones of said multiplexers (40, 42) being associated with different ones of said plurality of directions.

3. A node as claimed in claim 2, wherein a first of said plurality of directions is an uplink direction (60) and a second of said plurality of directions is a downlink (62) direction.

4. A node as claimed in claim 1, wherein each of said multiplexers is associated with a predetermined one or more of said input means and/or said output means.

5. A node as claimed in any preceding claim, wherein the received data comprises an address field (24).

6. A node as claimed in claim 5 wherein said address is arranged to identify said node.

7. A node as claimed in any preceding claim, wherein said node comprises a plurality of subnodes.

8. A node as claimed in claim 7, wherein said subnodes are arranged to provide different processes in respect of said data.

9. A node as claimed in claim 7 or 8 when appended to claim 5 or 6, wherein said address field is arranged to have a one part identifying said node and another part identifying a subnode.

10. A node as claimed in claim 5 or any claim appended thereto wherein at least part of said address field is used to determine which one or more of said output means is used.

11. A node as claimed in any preceding claim, wherein in said output means is arranged to unicast said data to a single node and/or multicast to a plurality of nodes.

12. A node as claimed in claim 11 when appended to claim 5, wherein said address of any node is used to send data to a plurality of nodes.

13. A node as claimed in claim 12, wherein said address of said node from which said data is output is used to send data to a plurality of nodes.

14. A node as claimed in claim 5 or any claim appended thereto, wherein said address field is arranged to identify one of a source node and a destination node.

15. A node as claimed in claim 14, wherein the address is arranged to identify a source node when a first one of said multiplexers is used and the address is arranged to identify a destination node when a second one of said multiplexers is used.

16. A node as claimed in claim 14, wherein a single multiplexing table associated with a given multiplexer is arranged to support both addressing based on the source node and addressing based on the destination node.

17. A node as claimed in any preceding claim, wherein said multiplexers are configurable.

18. A node as claimed in any preceding claim, wherein each of said mulitplexers comprises a storage means storing routing information.

19. A node as claimed in claim 18 when appended to claim 17, wherein the routing information stored in said storage means.is configurable

20. A node as claimed in claim 5 or any claim appended thereto, wherein at least one address is used by said multiplexers to direct data to different nodes.

21. A node as claimed in any preceding claim, wherein the content of said data is used to determine the multiplexer to be used for that data .

22. A communications bus comprising at least one node as claimed in any preceding claim.

23. A base transceiver comprising at least one node as claimed in any preceding claim.

24. A method of data communication in a node (12) of a communications bus, said method comprising the steps of:
receiving data from another node (12) of said bus via input means;
outputting data to another node (12) of said bus via output means;
providing a plurality of multiplexers (40, 42);
directing data from said input means to a predetermined one of said multiplexers (40, 42) and directing data for said output means, using said multiplexers (40, 42) to a predetermined one or more of said output means.

25. A method as claimed in claim 24, wherein said bus has data flowing in a plurality of directions and said node is arranged to receive data flowing in said plurality of directions, said directing step comprising the step of directing the data associated with different ones of said plurality of directions to different multiplexers.

26. A method as claimed in claim 24 or 25, wherein said directing means directs said data to a predetermined one or more of said output means in dependence on address information.

27. A method as claimed in claim 26, wherein said address information identifies a node.

28. A method as claimed in claim 26 or 27, wherein said address field is arranged to identify one of a source node and a destination node.'

29. A method node as claimed in claim 28, wherein the address is arranged to identify a source node when a first one of said multiplexers is used and the address is arranged to identify a destination node when a second one of said multiplexers is used.

30. A method as claimed in 28, wherein a single multiplexing table associated with a given multiplexer is arranged to support both addressing based on the source node and addressing based on the destination node.

31. A method as claimed in claim 27 or any claim appended thereto, wherein said address information further identifies a sub node.

## Patentansprüche

1. Knoten (12) eines Kommunikationsbusses, mit:
einer Eingabeeinrichtung (10) zum Empfangen von Daten von einem anderen Knoten (12) des Busses;
Ausgabeeinrichtungen zum Ausgeben von Daten an einen anderen Knoten (12) des Busses;
einer Kommunikationseinrichtung zwischen der Eingabeeinrichtung und den Ausgabeeinrichtungen, wobei die Kommunikationseinrichtung eine Vielzahl von Multiplexern (40, 42) aufweist, wobei Daten von der Eingabeeinrichtung an einen vorbestimmten der Multiplexer (40, 42) gelenkt werden und die Multiplexer (40, 42) Daten für die Ausgabeeinrichtungen an eine oder mehrere vorbestimmte der Ausgabeeinrichtungen lenken.

2. Knoten gemäß Anspruch 1, wobei der Bus Daten aufweist, die in eine Vielzahl von Richtungen fließen, und der Knoten eingerichtet ist, um in die Vielzahl von Richtungen fließende Daten zu empfangen, wobei entsprechende der Multiplexer (40, 42) mit verschiedenen der Vielzahl von Richtungen verknüpft sind.

3. Knoten gemäß Anspruch 2, wobei eine erste der Vielzahl von Richtungen eine Aufwärtsstreckenrichtung (60) ist und eine zweite der Vielzahl von Richtungen eine Abwärtsstreckenrichtung (62) ist.

4. Knoten gemäß Anspruch 1, wobei jeder der Multiplexer mit einer oder mehreren vorbestimmten der Eingabeeinrichtungen und/oder der Ausgabeeinrichtungen verknüpft ist.

5. Knoten gemäß einem der vorstehenden Ansprüche, wobei die empfangenen Daten ein Adressfeld (24) aufweisen.

6. Knoten gemäß Anspruch 5, wobei das Adressfeld eingerichtet ist, um den Knoten zu bezeichnen.

7. Knoten gemäß einem der vorstehenden Ansprüche, wobei der Knoten eine Vielzahl von Unterknoten aufweist.

8. Knoten gemäß Anspruch 7, wobei die Unterknoten eingerichtet sind, um verschiedene Verarbeitungen mit Bezug auf die Daten bereitzustellen.

9. Knoten gemäß Anspruch 7 oder 8, wenn abhängig von Anspruch 5 oder 6, wobei das Adressfeld eingerichtet ist, um einen Teil zu besitzen, der den Knoten bezeichnet, und einen anderen Teil zu besitzen, der einen Unterknoten bezeichnet.

10. Knoten gemäß Anspruch 5 oder einem davon abhängigen Anspruch, wobei zumindest ein Teil des Adressfelds verwendet wird, um zu bestimmen, welche eine oder mehreren der Ausgabeeinrichtungen verwendet wird/werden.

11. Knoten gemäß einem der vorstehenden Ansprüche, wobei die Ausgabeeinrichtungen eingerichtet sind, um die Daten per Unicast an einen einzelnen Knoten und/oder per Multicast an eine Vielzahl von Knoten zu senden.

12. Knoten gemäß Anspruch 11, wenn abhängig von Anspruch 5, wobei die Adresse von einem beliebigen Knoten verwendet wird, um Daten an eine Vielzahl von Knoten zu senden.

13. Knoten gemäß Anspruch 12, wobei die Adresse des Knotens, von welchem die Daten ausgegeben werden, verwendet wird, um Daten an eine Vielzahl von Knoten zu senden.

14. Knoten gemäß Anspruch 5 oder einem davon abhängigen Anspruch, wobei das Adressfeld eingerichtet ist, um einen Quellenknoten und einen Zielknoten zu bezeichnen.

15. Knoten gemäß Anspruch 14, wobei die Adresse eingerichtet ist, um einen Quellenknoten zu bezeichnen, wenn ein erster der Multiplexer verwendet wird, und die Adresse eingerichtet ist, um einen Zielknoten zu bezeichnen, wenn ein zweiter der Multiplexer verwendet wird.

16. Knoten gemäß Anspruch 14, wobei eine einzelne Multiplextabelle, die mit einem vorgegebenen Multiplexer verknüpft ist, eingerichtet ist, um sowohl eine Adressierung basierend auf dem Quellenknoten als auch eine Adressierung basierend auf dem Zielknoten zu unterstützen.

17. Knoten gemäß einem der vorstehenden Ansprüche, wobei die Multiplexer konfigurierbar sind.

18. Knoten gemäß einem der vorstehenden Ansprüche, wobei jeder der Multiplexer eine Speichereinrichtung aufweist, die Leitweglenkungsinformationen speichert.

19. Knoten gemäß Anspruch 18, wenn abhängig von Anspruch 17, wobei die in der Speichereinrichtung gespeicherten Leitweglenkungsinformationen konfigurierbar sind.

20. Knoten gemäß Anspruch 5 oder einem davon abhängigen Anspruch, wobei von den Multiplexern zumindest eine Adresse verwendet wird, um Daten an verschiedene Knoten zu lenken.

21. Knoten gemäß einem der vorstehenden Ansprüche, wobei der Inhalt der Daten verwendet wird, um den für diese Daten zu verwendenden Multiplexer zu bestimmen.

22. Kommunikationsbus, mit zumindest einem Knoten gemäß einem der vorstehenden Ansprüche.

23. Basis-Sender-Empfänger, mit zumindest einem Knoten gemäß einem der vorstehenden Ansprüche.

24. Verfahren zur Datenkommunikation in einem Knoten (12) eines Kommunikationsbusses, mit den Schritten:
Empfangen von Daten von einem anderen Knoten (12) des Busses über eine Eingabeeinrichtung;
Ausgeben von Daten an einen anderen Knoten (12) des Busses über Ausgabeeinrichtungen;
Bereitstellen einer Vielzahl von Multiplexern (40, 42) ;
Lenken von Daten von der Eingabeeinrichtung an einen vorbestimmten der Multiplexer (40, 42) und Lenken von Daten für die Ausgabeeinrichtungen unter Verwendung der Multiplexer (40, 42) an eine oder mehrere vorbestimmte der Ausgabeeinrichtungen.

25. Verfahren gemäß Anspruch 24, wobei der Bus Daten aufweist, die in eine Vielzahl von Richtungen fließen, und der Knoten eingerichtet ist, um in die Vielzahl von Richtungen fließende Daten zu empfangen, wobei der Lenkschritt den Schritt des Lenkens der Daten, die mit verschiedenen der Vielzahl von Richtungen verknüpft sind, an verschiedene Multiplexer aufweist.

26. Verfahren gemäß Anspruch 24 oder 25, wobei die Lenkeinrichtung die Daten in Anhängigkeit von Adressinformationen an eine oder mehrere vorbestimmte der Ausgabeeinrichtungen lenkt.

27. Verfahren gemäß Anspruch 26, wobei die Adressinformationen einen Knoten bezeichnen.

28. Verfahren gemäß Anspruch 26 oder 27, wobei das Adressfeld eingerichtet ist, um einen Quellenknoten und einen Zielknoten zu bezeichnen.

29. Verfahren gemäß Anspruch 28, wobei die Adresse eingerichtet ist, um einen Quellenknoten zu bezeichnen, wenn ein erster der Multiplexer verwendet wird, und die Adresse eingerichtet ist, um einen Zielknoten zu bezeichnen, wenn ein zweiter der Multiplexer verwendet wird.

30. Verfahren gemäß Anspruch 28, wobei eine einzelne Multiplextabelle, die mit einem vorgegebenen Multiplexer verknüpft ist, eingerichtet ist, um sowohl eine Adressierung basierend auf dem Quellenknoten als auch eine Adressierung basierend auf dem Zielknoten zu unterstützen.

31. Verfahren gemäß Anspruch 27 oder einem davon abhängigen Anspruch, wobei die Adressinformationen ferner einen Unterknoten bezeichnen.

## Revendications

1. Noeud (12) d'un bus de communication, ledit noeud comprenant
des moyens d'entrée (10) destinés à recevoir des données de la part d'un autre noeud (12) dudit bus ;
des moyens de sortie destinés à transmettre des données à un autre noeud (12) dudit bus ;
des moyens de communication entre lesdits moyens d'entrée et lesdits moyens de sortie, lesdits moyens de communication comprenant une pluralité de multiplexeurs (40 ; 42), où les données provenant desdits moyens d'entrée sont dirigées vers un multiplexeur prédéterminé parmi lesdits multiplexeurs (40, 42) et lesdits multiplexeurs (40, 42) dirigent les données destinées auxdits moyens de sortie vers un ou plusieurs moyens de sortie prédéterminés parmi lesdits moyens de sortie.

2. Noeud selon la revendication 1, dans lequel ledit bus possède des données circulant dans une pluralité de directions, et ledit noeud est agencé afin de recevoir les données circulant dans ladite pluralité de directions, des multiplexeurs respectifs parmi lesdits multiplexeurs (40, 42) étant associés à des directions différentes parmi ladite pluralité de directions.

3. Noeud selon la revendication 2, dans lequel une première de ladite pluralité de directions est une direction de liaison montante (60) et une seconde de ladite pluralité de directions est une direction de liaison descendante (62).

4. Noeud selon la revendication 1, dans lequel chacun desdits multiplexeurs est associé à un ou plusieurs desdits moyens d'entrée et/ou desdits moyens de sortie prédéterminés.

5. Noeud selon l'une quelconque des revendications précédentes, dans lequel les données reçues comprennent un champ d'adresse (24).

6. Noeud selon la revendication 5, dans lequel ladite adresse est agencée afin d'identifier ledit noeud.

7. Noeud selon l'une quelconque des revendications précédentes, dans lequel ledit noeud comprend une pluralité de sous-noeuds.

8. Noeud selon la revendication 7, dans lequel lesdits sous-noeuds sont agencés afin d'assurer différents processus par rapport auxdites données.

9. Noeud selon la revendication 7 ou 8 lorsqu'elle est jointe à la revendication 5 ou 6, dans lequel ledit champ d'adresse est agencé afin d'avoir une partie identifiant ledit noeud et une autre partie identifiant un sous-noeud.

10. Noeud selon la revendication 5 ou l'une quelconque des revendications jointes à celle-ci, dans lequel au moins une partie dudit champ d'adresse est utilisée afin de déterminer lequel d'un ou plusieurs desdits moyens de sortie est utilisé.

11. Noeud selon l'une quelconque des revendications précédentes, dans lequel lesdits moyens de sortie sont agencés afin de diffuser individuellement lesdites données vers un seul noeud et/ou d'effectuer une multidiffusion vers une pluralité de noeuds.

12. Noeud selon la revendication 11 lorsqu'elle est jointe à la revendication 5, dans lequel ladite adresse de n'importe quel noeud est utilisée afin d'envoyer des donnés vers une pluralité de noeuds.

13. Noeud selon la revendication 12, dans lequel ladite adresse dudit noeud à partir duquel lesdites données sont transmises est utilisée afin d'envoyer des données vers une pluralité de noeuds.

14. Noeud selon la revendication 5 ou n'importe quelle revendication jointe à celle-ci, dans lequel ledit champ d'adresse est agencé afin d'identifier l'un d'un noeud source et d'un noeud de destination.

15. Noeud selon la revendication 14, dans lequel l'adresse est agencée afin d'identifier un noeud source lorsqu'un premier desdits multiplexeurs est utilisé, et l'adresse est agencée afin d'identifier un noeud de destination lorsqu'un second desdits multiplexeurs est utilisé.

16. Noeud selon la revendication 14, dans lequel une seule table de multiplexage associée à un multiplexeur donné est agencée afin de supporter l'adressage basé sur le noeud source et l'adressage basé sur le noeud de destination.

17. Noeud selon l'une quelconque des revendications précédentes, dans lequel lesdits multiplexeurs sont configurables.

18. Noeud selon l'une quelconque des revendications précédentes, dans lequel chacun desdits multiplexeurs comprend des moyens de stockage stockant des informations de routage.

19. Noeud selon la revendication 18 lorsqu'elle est jointe à la revendication 17, dans lequel les informations de routage stockées dans lesdits moyens de stockage sont configurables.

20. Noeud selon la revendication 5 ou n'importe quelle revendication jointe à celle-ci, dans lequel au moins une adresse est utilisée par lesdits multiplexeurs afin de diriger les données vers différents noeuds.

21. Noeud selon l'une quelconque des revendications précédentes, dans lequel le contenu desdites données est utilisé afin de déterminer le multiplexeur à utiliser pour ces données.

22. Bus de communication comprenant au moins un noeud selon l'une quelconque des revendications précédentes.

23. Emetteur/récepteur de base comprenant au moins un noeud selon l'une quelconque des revendications précédentes.

24. Procédé de communication de données dans un noeud (12) d'un bus de communication, ledit procédé comprenant les étapes consistant à :
recevoir des données de la part d'un autre noeud (12) dudit bus via des moyens d'entrée ;
transmettre des données vers un autre noeud (12) dudit bus via des moyens de sortie ;
prévoir une pluralité de multiplexeurs (40 ; 42);
diriger les données provenant desdits moyens d'entrée vers un multiplexeur prédéterminé parmi lesdits multiplexeurs (40, 42), et diriger les données destinées auxdits moyens de sortie, en utilisant lesdits multiplexeurs (40, 42), vers un moyen de sortie prédéterminé parmi lesdits moyens de sortie.

25. Procédé selon la revendication 24, dans lequel ledit bus possède des données circulant dans une pluralité de directions, et ledit noeud est agencé afin de recevoir les données circulant dans ladite pluralité de directions, ladite étape d'orientation comprenant l'étape d'orientation des données associées à des directions différentes parmi ladite pluralité de directions vers différents multiplexeurs.

26. Procédé selon la revendication 24 ou 25, dans lequel lesdits moyens d'orientation dirigent lesdites données vers un ou plusieurs desdits moyens de sortie prédéterminés selon les informations d'adresse.

27. Procédé selon la revendication 26, dans lequel lesdites informations d'adresse identifient un noeud.

28. Procédé selon la revendication 26 ou 27, dans lequel ledit champ d'adresse est agencé afin d'identifier l'un d'un noeud source et d'un noeud de destination.

29. Procédé selon la revendication 28, dans lequel l'adresse est agencée afin d'identifier un noeud source lorsqu'un premier desdits multiplexeurs est utilisé, et l'adresse est agencée afin d'identifier un noeud de destination lorsqu'un second desdits multiplexeurs est utilisé.

30. Procédé selon la revendication 28, dans lequel une seule table de multiplexage associée à un multiplexeur donné est agencée afin de supporter l'adressage basé sur le noeud source et l'adressage basé sur le noeud de destination.

31. Procédé selon la revendication 27 ou n'importe quelle revendication jointe à celle-ci, dans lequel lesdites informations d'adresse identifient en outre un sous-noeud.
